# EUROPEAN PATENT SPECIFICATION

(11) **EP 3 500 898 B1**
(45) Date of publication and mention of the grant of the patent: **17.11.2021**
(21) Application number: 17842150.9
(22) Date of filing: 17.08.2017
(51) Int. Cl.: G05D 1/00, G06Q 50/30, G08G 1/00, G06Q 10/02, G08G 1/005

(54) **HAILING A VEHICLE**
RUFEN EINES FAHRZEUGS
HÉLAGE D'UN VÉHICULE

(30) Priority: 18.08.2016 US 201615240072; 18.08.2016 US 201615240150
(43) Date of publication of application: 26.06.2019
(60) Divisional application: 21192232.3
(73) Proprietor: Motional AD LLC, Boston, MA 02210 (US)
(72) Inventor: IAGNEMMA, Karl, Boston, MA 02210 (US); ROBBEL, Philipp, Boston, MA 02210 (US); WOLFF, Eric, Boston, MA 02210 (US); RAVICHANDRAN, Harshavardhan, Boston, MA 02210 (US)
(74) Representative: Fish & Richardson P.C.
(86) International application number: PCT/US2017/047433
(87) International publication number: WO 2018/035374

(56) References cited:
- EP-A1- 2 982 562
- EP-A1- 2 982 562
- US-A- 5 166 668
- US-A1- 2009 177 502
- US-A1- 2013 085 817
- US-A1- 2014 067 488
- US-A1- 2014 067 488
- US-A1- 2014 303 827
- US-A1- 2015 279 131
- US-A1- 2015 336 502
- US-A1- 2016 139 600
- US-B1- 8 676 427
- US-B1- 9 412 280
- US-B1- 9 412 280

## Description

### Background

This description relates to hailing a vehicle such as an autonomous vehicle.

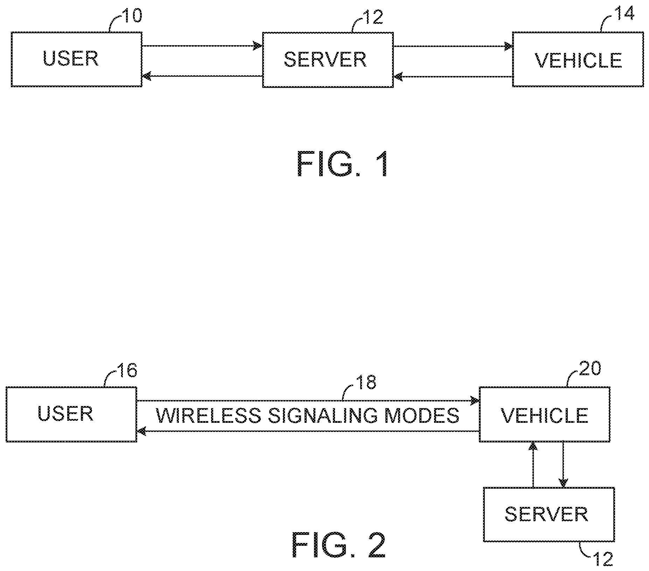

As shown in figure 1, in a common method for a person 10 to hail a vehicle such as a taxicab or a ride-sharing vehicle, the person enters a request by interacting with a mobile app. The request is processed by the mobile app and then forwarded through the cellular telephone network or the Internet to a central server 12 where it is processed and then forwarded through the cellular telephone network to a driver of the vehicle 14.

US 2014/067488 describes systems and methods for engaging a for-hire vehicle (FHV). A mobile computing device receives information from a remote server indicating FHV activity in a geographical region of interest. A user interface of the mobile computing device displays a map having one or more icons thereon indicating locations of one or more FHVs. A user provides an input indicating a desire to hail one of the one or more FHVs, and receives an acceptance of hail. Once within range of the FHV, the device links with a computing device disposed within the hailed FHV over a local area network, providing information related an FHV trip to the remote server, receiving a calculated fare, and displaying the calculated fare to the user.

### Summary

The invention is defined in the appended claims. In general, in an aspect, an indication is received through a user interface of an intention of a potential rider to use an autonomous vehicle. In response to the receipt of the indication, a hailing request is sent by a signaling mode to one or more autonomous vehicles that can receive the hailing request directly in accordance with claim 1 of the appended claims.

In general, in an aspect, a hailing request carried by a signaling mode is received directly at a receiving device of an autonomous vehicle, according to claim 8 of the appended claims.

In general, in an aspect, there is a device for hailing an autonomous vehicle, according to claim 7 of the appended claims.

Implementations may include features according to the appended claims.

In general, in an aspect, there is a device for use at an autonomous vehicle according to claim 13 of the appended claims.

These and other aspects, features, implementations, and advantages can be expressed as methods, apparatus, systems, components, program products, business methods, means or steps for performing functions, and in other ways.

These and other aspects, features, implementations, and advantages will become apparent from the following description and from the claims.

### Description

Figures 1, 2, 9, and 10 are block diagrams.
Figures 3, 4, and 8 are schematic views of vehicle hailing.
Figures 5, 6, and 7 are display screen shots.
Figure 11 is a schematic diagram of a vehicle.
Figures 12 and 13 are schematic diagrams.

Here we describe a system and techniques for a person to use in hailing a vehicle, such as an autonomous vehicle. As shown in figure 2, in some implementations of the system and techniques that we describe here, a user 16 hails a vehicle 20 by communication that is achieved directly with the vehicle using one or more wireless signaling modes 18. In some cases, a server 12 can also or alternatively be in direct communication with the vehicle.

We sometimes refer to the system and techniques broadly as a "hailing system." We use the term "hailing" or "hail" broadly to include, for example, any action by any person in any context (for instance a pedestrian) to signal, call, flag down, alarm, or in any other way to attract the attention of a vehicle for the purpose of indicating the person's wish to ride in (alone or with others), hire for service, cause a delivery to be made by, or otherwise make use of the vehicle (such as an autonomous vehicle).

Hailing can be done by, through the medium of, or with the assistance of a hailing device. We use the phrase "hailing device" broadly to include, for example, any apparatus, equipment, instrument, or other device associated with hailing, for example, a phone or other handheld device, a smartwatch or bracelet or other wearable device, or a mounted or otherwise stationary device located on or near a sidewalk or road edge, to name only a few. We use the phrase "potential rider" broadly to include, for example, any person in any context who wishes to ride in (alone or with others), hire for service, cause a delivery to be made by, or otherwise make use of a vehicle (such as an autonomous vehicle). We use the term "hire a vehicle for service" broadly to include, for example, to obtain access in any way and in any context to a vehicle for the purpose of, for example, riding in the vehicle, causing a delivery to be made by the vehicle, or otherwise making use of the vehicle. Although we sometimes refer in our discussion to autonomous vehicles, the hailing system could also be used for semi-autonomous vehicles and in some contexts for other kinds of vehicles driven in other ways. We sometimes use the term "autonomous vehicle" to refer broadly to any such vehicle. An autonomous vehicle can be hailed when it is passing along a roadway nearby to a potential rider, or when it is stopped, or in other contexts.

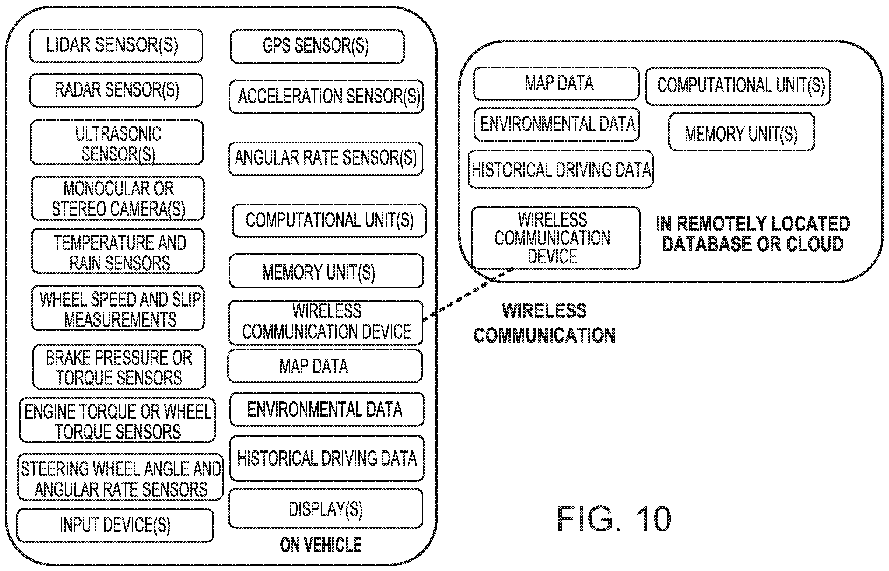

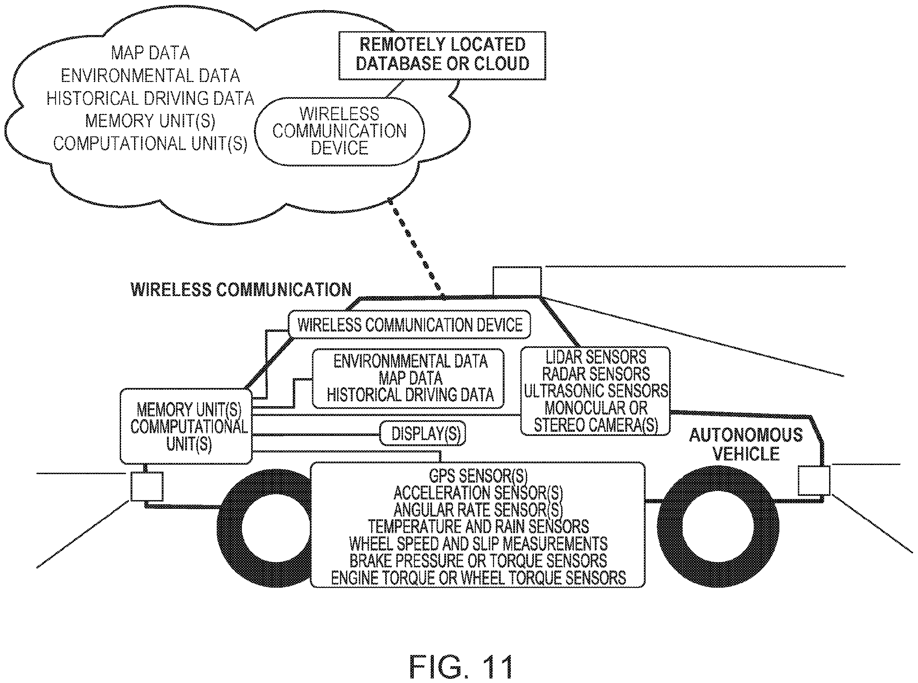

An autonomous vehicle can drive safely without human intervention during part of a journey or an entire journey. As shown in figures 10 and 11, an autonomous vehicle includes sensors, actuators, computers, and communication devices to enable automated generation and following of routes through the environment. Autonomous vehicles typically contain one or more video sensors, at least one of which is typically oriented in the forward direction in order to capture data related to the scene in front of the vehicle. Additionally, autonomous vehicles may contain one or more LIDAR sensors. Autonomous vehicles typically are equipped with a wireless two-way communication capability to access data and information stored on servers in a cloud service. As also shown in figures 10 and 11, the autonomous vehicle can communicate wirelessly with a server at a central location.

These and other capabilities can enable the autonomous vehicle to react to detected visual or other physical features in the environment, including particular shapes, colors, textures, human gestures, and other visual stimuli. Autonomous vehicles may also be equipped with auditory sensors to capture and react to sounds in the environment, and horns, speakers, bells, or other noisemakers to emit sound. We will refer to these visual and auditory capabilities and devices and a broad range of other detection capabilities and devices by the general phrase "stimulus detectors."

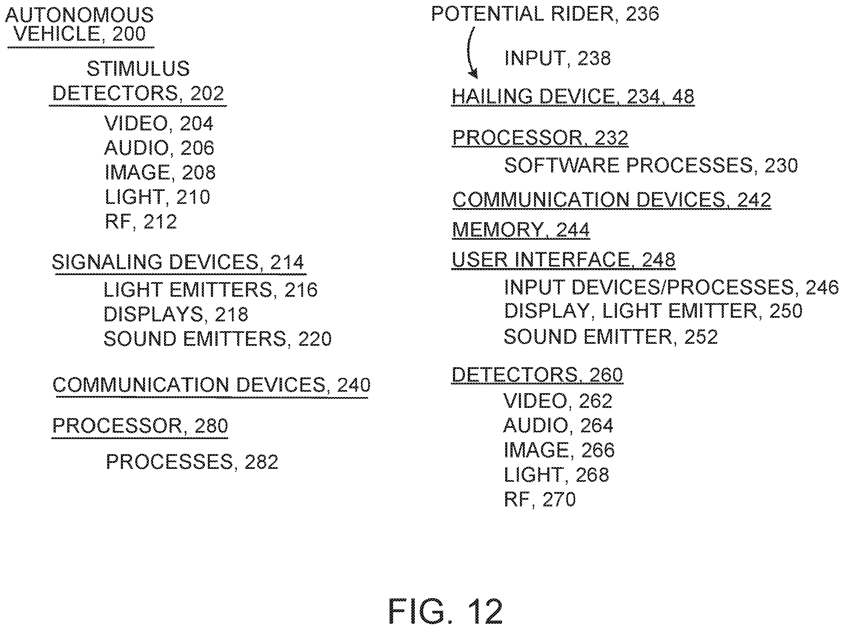

Thus, as shown in figure 12, the stimulus detectors 202 of an autonomous vehicle 200 can include video 204, audio 206, image 208, light 210, RF 212, for example.

The autonomous vehicles used with the hailing system that we describe here may also be equipped with lights, display screens, light-emitting diodes, or other light emitting devices 216 mounted, for example, on the exterior of the vehicle such that they can be viewed from outside the vehicle. Autonomous vehicles may have displays 218, lights, sirens, klaxons, or other sound emitters 220, and other signaling devices mounted, for example, external to the vehicle. We will refer to these signaling devices and techniques and to a broad range of other signaling capabilities and equipment as "signaling devices." Often the signaling devices operate in modes that are perceptible by and understood by people.

Conventionally, vehicles (such as taxicabs and vehicles being driven by people for ride-hailing services) can be hired for service by a potential rider using a ride hailing software process 230 that may run on a processor unit 232 embedded within a smartphone, laptop, tablet, or other computing device 234. The potential rider 236 typically inputs 238 to the ride hailing software process a desired pick-up location and may also input a desired drop-off (i.e., a goal) location (e.g., a destination address or street intersection).

In known systems, the desired pick-up location is then communicated wirelessly to a centralized server tasked with assigning movement directions to one or more and potentially a large fleet (e.g., hundreds or thousands) of vehicles. The centralized server then runs a routing software process that provides by wireless communication to a particular vehicle the potential rider's pick-up location. The particular vehicle then is driven to the desired pick-up location to meet the potential rider. Once the potential rider enters the vehicle and completes an identification process (not necessarily in that order), the vehicle is considered hired for service and begins the journey to the desired drop-off location.

In some typical use cases of autonomous vehicles, the desired pick-up or goal location may be specified by an algorithm (which may be located on a centralized server in the cloud and tasked with optimizing the locations of a fleet of autonomous vehicles with a goal of minimizing rider wait times when hailing a vehicle), or may be provided by another process (e.g., an emergency process that identifies the nearest hospital as the goal position due to a detected medical emergency on board the vehicle).

In implementations of the hailing system that we describe here, a potential rider of a vehicle (e.g., an autonomous vehicle) may wish to hire a vehicle for service without, for example, inputting a desired pick-up location into a smartphone, laptop, tablet, or other computing device, but rather to simply hail the vehicle (such as an unoccupied autonomous vehicle passing on a roadway). The hailing system that we describe here can also apply to other scenarios, such as hailing an autonomous vehicle that is parked at a particular location.

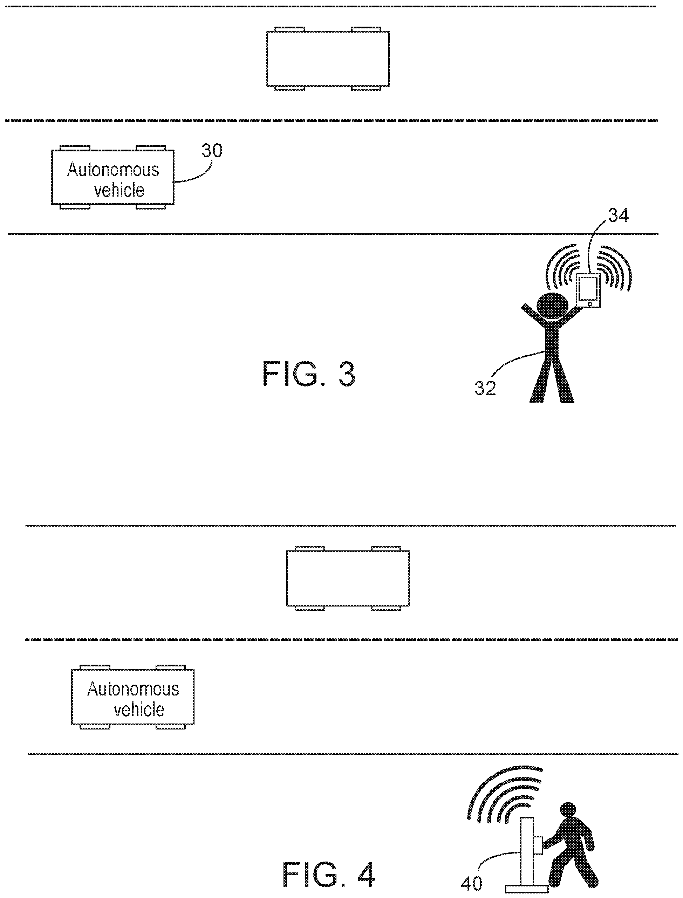

As shown in figure 3, in implementations of our hailing system, hailing of an autonomous vehicle 30 can be accomplished by sending information from or on behalf of or in association with the potential rider 32 to the autonomous vehicle using one or a combination of two or more of a variety of signaling modes including those discussed below. We use the term "signaling mechanism" broadly to include, for example, any device, equipment, apparatus, or system by which information about the hailing can be sent to the autonomous vehicle. We use the term "signaling mode" broadly to include, for example, any form in which information can be sent by wireless signals or other methods, including non-electronic methods. The signaling mode includes displaying a sequence of images and may among others, include displaying an image, emitting a sequence of light signals, emitting a sequence of sound signals, emitting a wireless communication signal, or engaging in gestures or facial expressions, to name a few. In most cases, the information signaling mechanism and mode are designed to increase the incidence rate of true detections (i.e., scenarios in which the autonomous vehicle correctly identifies that a hailing request has been directed to the vehicle) and to reduce the incidence rate of false detections (i.e., scenarios in which an autonomous vehicle incorrectly identifies that a hailing request has been directed to the vehicle when none has been sent or one has been sent to another vehicle, for example ).

As shown in figure 3, the potential rider 32 can signal the autonomous vehicle using a hailing device 34 such as a mobile device (or a wide variety of other devices).

In some instances, the hailing may be performed by a potential rider (or someone else, such as a companion) who is carrying a hailing device (e.g., a smartphone). In some cases (see figure 4), the hailing may be performed using a hailing device that is mounted or installed in a fixed location, such as on a structure at which vehicle hailing may commonly occur (e.g., outside a busy hotel). In some cases, the hailing device may be typical human capabilities performed by a potential rider (or someone on her behalf) who is not carrying any external hailing device, but rather uses other signaling mechanisms, such as a hand, or facial, or other gesture or whistling, yelling, or making another sound to transmit information. In some implementations, the hailing may be performed by interacting with a device attached to the autonomous vehicle itself (e.g., a smart card reader that can read the user's smart card or a smart device that can communicate with the user's smartphone.)

Hailing using the hailing system can be done in a way that complies with a predefined and commonly accepted hailing protocol that could cover the manner in which the signaling mechanism is to operate, the information that is to be transmitted, its format, and a wide variety of other aspects. A wide variety of entities that operate individual autonomous vehicles and fleets of them to be hired for service and entities that produce software, hardware, and other equipment for use in autonomous vehicles and hailing devices can subscribe to such a hailing protocol.

A desirable aspect of such a hailing protocol is that it may enable a potential rider to hail a vehicle more quickly (because vehicles of more than one fleet operator comply with the protocol) than would be achievable by hailing an autonomous vehicle that is operated by one specific fleet operator under a proprietary hailing method. Interoperability among fleet operators could also require a common central cloud or system that could broadcast the hailing requests to all fleet operators.

Another desirable aspect of the hailing system that we describe here is that the potential rider may be able to hail a vehicle more quickly than if the rider were required to input a desired pickup location (which is not required in implementations of the hailing system), wait for the system to assign a vehicle to her, and then wait for that vehicle to arrive at the pickup location.. Another desirable aspect of some implementations of the hailing system is that the potential rider may be able to hail a vehicle anonymously, e.g., without using a ride hailing software process that may be tied to a user account that includes personally identifying information. In other words, the potential rider need not say where she is headed or expose any of her personal information in the process of using the hailing system.

On the other hand, depending on the signaling mechanism, certain kinds of information associated with the hailing request can be transmitted to the autonomous vehicle by the hailing system. This information may include, but not be limited to, information about the number of passengers, the desired class or cost of service (which may be used to exclude vehicles of a certain size or class from responding to the hailing request), information about a priority or emergency hailing request, or personal identifying information about the rider, or a combination of any two of more of those, and of other information. Transmitted information may employ any of a number of possible encryption techniques.

The hailing device can include, for example, one or more of the following (and wide variety of others):
1. As shown in the example of figure 12, a smart phone, tablet, handheld PC, smartwatch, bracelet, or other wearable device or other configurable mobile device that is equipped with at least a processor 232, a memory unit 244, an input device or process 246 associated with a user interface 248, and (in some cases is equipped with) a display screen, light-emitting diode(s), luminescent material, e-ink screen, or other light emitting or light modulating media 250. Such
   display and light-emitting media is able to exhibit or modulate sequences of images, colors, or lights or a combination of any two or more of them and other visual indications. The hailing device may be equipped with one or more video sensors 262 capable of detecting visual features in the environment. The device may be equipped with one or more microphones or speakers (or both) that enable the capability to detect and emit sound 264. The device may be equipped with wired or wireless receivers and transmitters that enable it to communicate with, among other things, a central cloud or servers 242.
2. A printed paper or card.
3. A whistle or other noisemaker, including programmable noisemakers equipped with at least a processor and speaker, and potentially a microphone.

### Modes for hailing an autonomous vehicle

Exemplary methods for hailing an autonomous vehicle include but are not limited to the following methods, which may be employed either independently or in combination.

### Image display

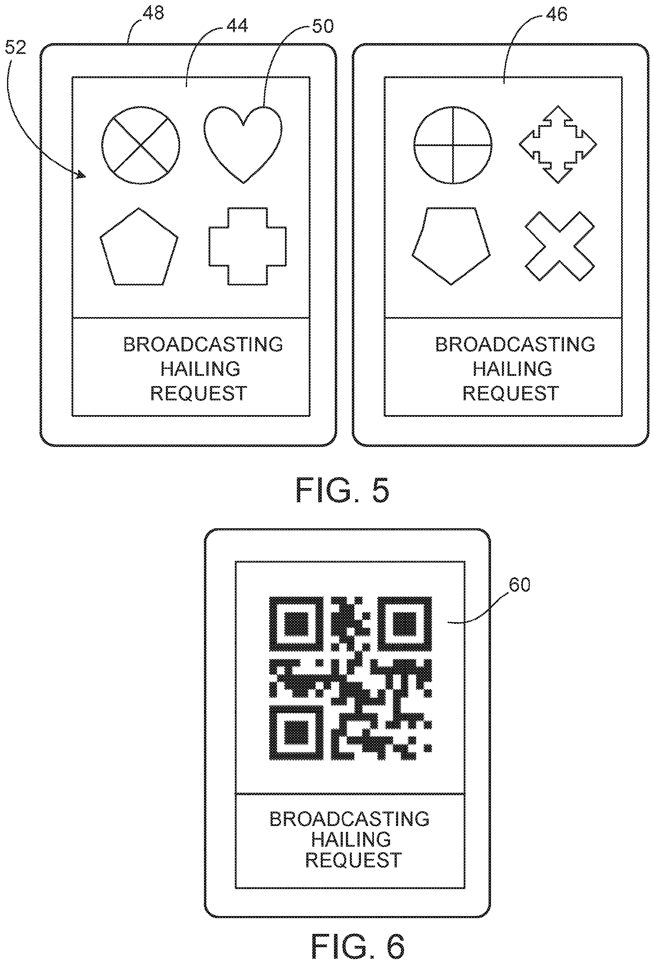

As shown in figure 5, according to the invention, hailing of an autonomous vehicle is achieved by displaying a sequence of images 44, 46, and may be achieved by displaying a particular image (for example, displayed alternating at a fixed repeat rate) on a hailing device 48 (234 in figure 12) in a manner (e.g., presenting the device in an orientation such that the image or images are displayed toward the roadway at shoulder height or above) that is likely to lie within a visual line of sight of, for example, video sensors 204 mounted on a passing autonomous vehicles. For example, the hailing device can be located at a sidewalk or road edge, or at an intersection where the potential rider is standing.

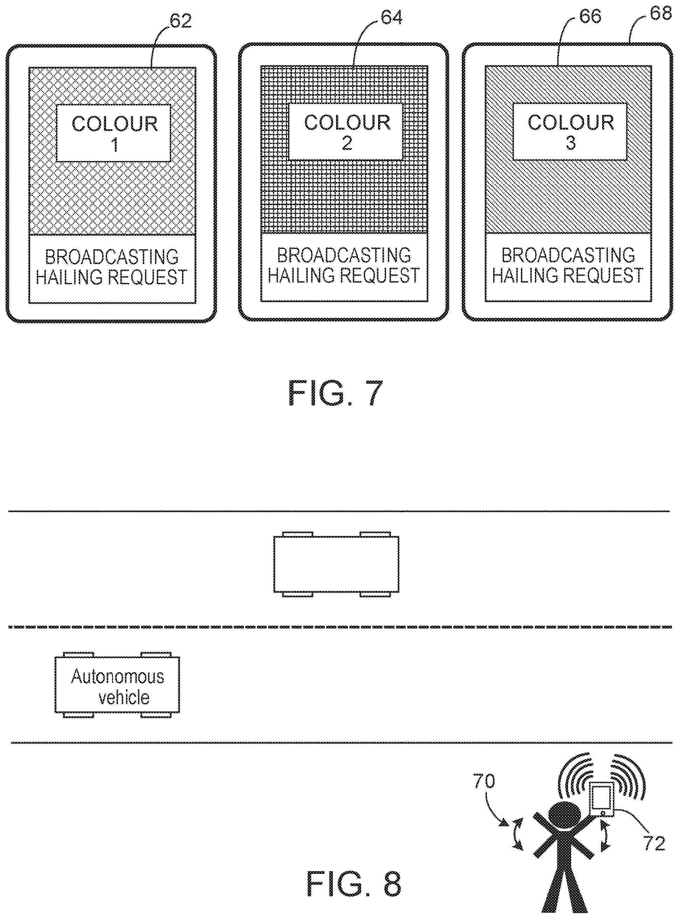

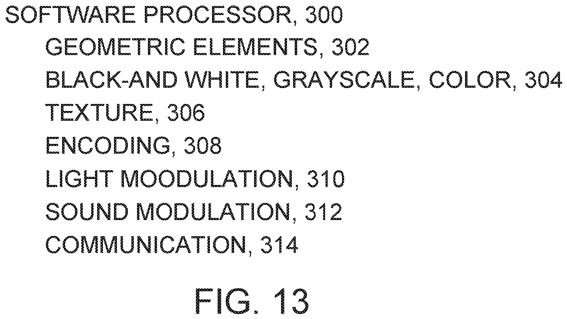

The image or images to be displayed may exhibit one or a combination of any two or more of the following properties:
1. Geometric features 50 (e.g., image features constructed of geometric elements) or patterns of features 52 such as features that are not smaller than those that can reliably be resolved by an autonomous vehicle at a nominal hailing distance (e.g., 1-30 meters) using, for example, a detection system based on vision sensor(s) 208 mounted on the vehicle and that have a typical field of view (e.g., 90 degrees horizontal x 60 degrees vertical) and resolution (e.g., 640 pixels horizontal x 480 pixels vertical). As shown in figure 13, the software processes 300 running on the hailing device can include geometric element processes 302 to form and present the geometric features.
2. Formed in black-and-white (as in figure 5), grayscale, or color. Displaying a grayscale or color image rather than a black-and-white image may be advantageous because the grayscale and color image may contain more information than a black-and-white image and may therefore enable encoding of a greater amount of information related to the hailing request, or enable reduced incidence of false detections or both. Detection of color information contained in an image implicitly requires that autonomous vehicles be equipped with color video sensors. The software processes 300 running on the hailing device can include black-and-white, grayscale, and color processes 304 to produce the appropriate images.
3. Textures (e.g., arrangements of colors or intensities in a region of an image or the entire image) that can reliably be resolved by an autonomous vehicle at a nominal hailing distance using a detection system based on vision sensor(s) mounted on the vehicle and that have a typical field of view and resolution. The software processes 300 running on the hailing device can include texture generating processes 306.
4. The texture might include information that is encoded in a format (such as QR codes 60 as shown in figure 6, which encode information in a binary format). This allows for more information to be communicated to the vehicle. Additional information can be encoded in the hailing request by increasing the resolution of the format. The software processes 300 running on the hailing device can include encoding processes 308 for this purpose.
5. A sequence of colors 62, 64, 66 can be displayed by the hailing device at a fixed repeat rate, as shown in figure 7. Figure 7 shows coloured light being emitted by a display screen 68 (250 in figure 12). Other light sources, such as LEDs, torches, and flashlights, to name a few, can be used. The emitted light can be in the visible spectrum or the invisible spectrum. The light could be of a single wavelength or contain multiple wavelengths. The pattern can be changed temporarily as can the intensity of the light. As discussed later, sounds can be used as the signaling mode, and the frequencies of the sound can be controlled similarly. Temporal and spectral control of the light can be handled by light modulation processes 310 running on the hailing device 300.
6. The appearance of the image should be uncommon in order to reduce the chance that a similar or identical image that is not produced by a hailing device is detected by sensors on an autonomous vehicle, thereby resulting in a false detection. For example, the image should not be similar to images that are commonly located on traffic signs or other common sidewalk features, such as news boxes, bus stop shelters, etc.

Information related to a hailing request (e.g., the desired class or cost of service, or the presence of a priority or emergency hailing request) may be encoded in the image by the encoding and light modulation processes 308 and 310 using various methods, including but not limited to the following individual methods, or combinations of these methods:
1. Varying image features, e.g., displaying a unique image or sequence of images depending on the information related to the hailing request. For example, a particular image may be displayed for a hailing request by a potential rider who is a single passenger for an autonomous vehicle offering a standard class of service, while another particular image may be displayed for a hailing request by a potential rider who represents two passengers for an autonomous vehicle offering a premium class of service.
2. Varying a sequence of images displayed, including varying the temporal properties of the sequence of images displayed. For example, a particular sequence of images may be displayed for a hailing request by a potential rider who is a single passenger for an autonomous vehicle offering a standard class of service, while another particular sequence of images may be displayed for a hailing request by a potential rider who represents two passengers for an autonomous vehicle offering a premium class of service. The temporal properties such as the display duration of each image may be modulated to encode additional information, or reduce incidence of false detections.
3. Varying the black-and-white, grayscale, or color properties of the image or sequence of images displayed, including varying the temporal properties of the color of the images. For example, a particular red image may be displayed for a hailing request by a potential rider who is a single passenger for an autonomous vehicle offering a standard class of service, while the same particular image may be displayed green for a hailing request by a potential rider represents a party of two passengers for an autonomous vehicle offering a premium class of service.
4. Varying the textural properties of an image or sequence of images displayed. For example, a particular black-and-white checkerboard image may be displayed for a hailing request by a potential rider who is a single passenger for an autonomous vehicle offering a standard class of service, while a particular green-and-yellow checkerboard image may be displayed for a hailing request by a potential rider who represents a party of two passengers for an autonomous vehicle offering a premium class of service.
5. The image to be displayed may be a company logo or other symbol that conveys an advertisement or promotional information. The advertisement may be for an autonomous vehicle company (e.g., a company that operates an autonomous vehicle that may respond to the hailing request) or another business entity.

### Emitting light

Hailing of an autonomous vehicle may be achieved by emitting light from a hailing device in a manner (e.g., presenting the device in an orientation such that the emitted light is directed toward the roadway at shoulder height or above) that is likely to lie within a visual line of sight of video sensors mounted on an autonomous vehicle (e.g., from a sidewalk or road edge, or by a potential rider who is standing at an intersection).

The emitted light to be displayed may exhibit one or a combination of two or more of the following properties based on execution of encoding and light modulation processes 308 and 310 on the hailing device 300:
1. The wavelength of the light may lie within the visible spectrum or, given sufficient emission capabilities of the hailing device, the near infrared spectrum or other spectrum provided that the wavelength can be detected by video sensors mounted on the autonomous vehicle.
2. The wavelength of the light in the visible spectrum may lie in bands associated with a particular color or many colors.
3. The wavelength of the light may be uniform or variable.
4. The wavelength of the light may be controllable or uncontrollable.
5. The intensity of the light may be uniform or variable. The light intensity should be reliably detectable by an autonomous vehicle at a nominal hailing distance using a detection system based on vision sensor(s) or light detection sensor(s) that have a typical detection sensitivity.
6. The intensity of the light may be controllable or uncontrollable.
7. The characteristics of the emitted light (e.g., the color, wavelength, intensity temporal frequency (i.e. blinking rate), or combinations of them) should be uncommon, in order to minimize the chance that emitted light having similar or identical characteristics is erroneously detected by sensors on an autonomous vehicle as a hailing request, thereby resulting in a false detection. For example, the emitted light should not be similar in characteristics to the light emitted by a typical vehicle turn indicator.

Information related to the hailing request (e.g., the desired class or cost of service, or the presence of a priority or emergency hailing request) may be encoded in the emitted light by the encoding processes 308 using various methods, including but not limited to the following individual methods, or combinations of these methods:
1. Varying the light wavelength uniformly on the display of the hailing device. For example, the display device may display a color that transitions from red to green according to a specified temporal pattern.
2. Varying the light wavelength according to specific spatial or temporal patterns on the display (e.g., distinct spatial areas of the display or the entire display may display distinct light wavelengths uniformly or in a time varying fashion). For example, a particular checkerboard image may be displayed with individual cells of the checkerboard varying in color at distinct frequencies.
3. Varying the light intensity uniformly on the entire display, or according to specific spatial or temporal patterns on the display.

### Gesturing

As shown in figure 8, hailing of a passing autonomous vehicle may be achieved by performing a (e.g., uncommon) gesture or sequence of gestures 70 at a position and in an orientation that is likely to lie within visual line of sight of video or LIDAR sensors mounted on an autonomous vehicle (e.g., from a sidewalk or road edge, or when a potential rider is standing at an intersection). A software process 282 (figure 12) running on a processor 280 mounted on the autonomous vehicle would then analyze captured data from the video or LIDAR sensors to detect the presence of the gesture(s) that are intended to represent a hailing request.

The gesture(s) to be displayed may exhibit the following properties:
1. The gesture or gestures may comprise static positioning or dynamic motion of one or more of the arms or legs or both of the potential rider or other person, using positions and motions that are sufficiently different from normal limb positioning and motion to be resolved correctly by an autonomous vehicle at a nominal hailing distance using a detection system based on vision sensor(s) mounted on a vehicle and that has a typical field of view and resolution.. The gesture or gestures may also comprise facial expressions which can be resolved correctly by an autonomous vehicle at a nominal hailing distance using a detection system based on vision sensor(s) mounted on a vehicle and that has a typical field of view and resolution. An example of a facial gesture is gazing continuously at a car for some minimum duration of time. The gesture can be combined with the use of a hailing device 72.
2. The appearance of the gesture or gestures should be uncommon in order to minimize the chance that a similar or identical gesture that is not being performed for the purpose of hailing an autonomous vehicle is detected by sensors on an autonomous vehicle, thereby resulting in a false detection. For example, the appearance of the gesture or gestures should not be similar to gestures used by cyclists to indicate a turn or by police or flagmen to regulate the flow of traffic.
3. A common gesture (such as waving hands or arms) may be used to hail an autonomous vehicle when combined with a secondary, visually distinctive stimulus in order to reduce false detections. One such secondary visual stimulus may be the potential rider looking at or tracking the autonomous vehicle by her head pose while executing the common gesture. A software process 282 running on a processor 280 mounted on the autonomous vehicle would then analyze captured data from the video or LIDAR sensors or both to detect the presence of both gesture and the secondary visual stimulus whose combined occurrence is intended to represent a hailing request.

Information related to the hailing request (e.g., the desired class or cost of service, or the presence of a priority or emergency hailing request) may be encoded in the gesture(s) through various methods, including but not limited to the following individual methods, or combinations of these methods:
1. Varying particular gestures, e.g., displaying a unique gesture or sequence of gestures depending on the information related to the hailing request. For example, a particular gesture may be displayed for a hailing request by a single potential rider for an autonomous vehicle offering a standard class of service, while another particular gesture may be displayed for a hailing request by a potential rider on behalf of a party of two passengers for an autonomous vehicle offering a premium class of service.
2. Varying the sequence of gestures displayed, including varying the temporal properties of the sequence of gestures displayed. For example, a particular sequence of gestures may be displayed for a hailing request by a single potential rider for an autonomous vehicle offering a standard class of service, while another particular sequence of gestures may be displayed for a hailing request by a potential rider on behalf of a party of two passengers for an autonomous vehicle offering a premium class of service. The temporal properties such as the display duration of each gesture may be modulated to encode additional information, or reduce incidence of false detections.

### Emitting sounds

Hailing of a passing autonomous vehicle may be achieved by emitting from a hailing device (here including a smartphone or similar device, a whistle or similar device, or the potential rider using her mouth) an uncommon sound or sequence of sounds of sufficient volume that they can be detected by sensors mounted on a passing autonomous vehicle and not produce incidences of false detection. The emitting of the sound and the features and characteristics of the emitted sound can be controlled and modulated by one of the encoding or sound modulation processes 308, 312 running on a hailing device.

The emitted sound or sounds to be emitted may exhibit the following properties:
1. The sound frequency may lie within the typical human audible frequency range or, given sufficient emission capabilities of the hailing device, outside the typical human audible frequency range. Emission of a particular sound frequency depends upon by auditory sensors mounted on the passing autonomous vehicle being able to detect such a frequency.
2. The sound frequency in the typical human audible frequency range may lie in bands associated with a particular note or many notes.
3. The sound frequency may be uniform or variable.
4. The sound frequency may be controllable or uncontrollable.
5. The sound volume may be uniform or variable. The volume level should be chosen to be reliably detected by a sound measurement sensor or sensors mounted on an autonomous vehicle with a typical detection sensitivity and given a typical expected ambient noise level.
6. The sound volume may be controllable or uncontrollable.
7. The sound or sounds can be uncommon, in order to reduce the chance that a similar or identical ambient sound will be detected by sensors on an autonomous vehicle and interpreted as a hailing request, thereby resulting in a false detection. For example, the sound or sounds should not be similar in nature to common sounds such as car horns, car alarms, or emergency vehicle sirens.

Information related to the hailing request (e.g., the desired class or cost of service, or the presence of a priority or emergency hailing request) may be encoded in the emitted sound by the encoding and sound modulation processes 308, 312 using various methods, including but not limited to the following individual methods, or combinations of these methods:
1. Varying the sound frequency uniformly or according to specific temporal patterns. The pattern of sound frequencies to be emitted may be a company jingle, song, or catchphrase that conveys an advertisement or promotional information. The advertisement may be for an autonomous vehicle company (e.g., a company that manages autonomous vehicles that may respond to the hailing request) or another business entity.
2. Varying the sound volume uniformly or according to specific temporal patterns.

### Direct wireless communication

An autonomous vehicle may be hailed using a hailing device that directly communicates wirelessly with the autonomous vehicle without the hailing request passing through the central server from the potential rider to the autonomous vehicle. The hailing device could be a mobile device or could be fixed at a particular location. The hailing device and a communication device on the autonomous vehicle both would need to support an appropriate communication technology, for example, they would both need to include transmitters, receivers, and communication software. Many existing communication technologies such as Radio Frequency (RF), Infrared (IR), WiFi, WiMax, and Bluetooth may be used or adapted for this purpose. The hailing device could broadcast the request to nearby vehicles, and once a particular autonomous vehicle has responded it can then communicate exclusively with that vehicle. In the case of a hailing device, communication process 314 can handle the communications and compliance with the appropriate protocols.

Direct wireless communication can achieved, in some examples, by use of vehicle to infrastructure (V2I) compatible protocols. In such examples, a hailing device can send a hailing request to infrastructure (using the V2I compatible protocol). The infrastructure then relays the hailing request to vehicles in the vicinity (say, within a range of 500 meters). Autonomous vehicles pick up the relayed hailing requests using their V2I-compatible receivers. This mode of hailing is direct in that no central server is involved. The infrastructure could be a wide range of devices such as WiFi access points mounted on, say, streetlights.

### Combinations of hailing modes

Each of the various signaling modes that we have discussed can be used in combination with one or more of the other modes, and with additional modes not mentioned explicitly. Using modes in combination can reduce the incidence rate of false detections. For example, a hailing method may rely on executing a particular gesture (e.g., waving one's arm above one's head) while displaying a hailing device that is emitting a particular temporal sequence of colors. A wide range of other combinations of signaling modes would also be possible.

### Fixed hailing device

As mentioned above, an autonomous vehicle may also be hailed by a hailing device, such as a hailing device forming part of a kiosk that is fixed at a location. This is particularly relevant, but not limited, to areas where autonomous vehicles are commonly hailed, or where there is usually a good chance of an autonomous vehicle being present nearby, or where there is high pedestrian throughput, or at autonomous vehicle stations. A hailing device in a fixed location could provide a user interface in a variety of modes, from a simple button to something more complex that includes a screen, speakers, microphone, touch-screen, or a combination of these and similar input/output components. The user interface could enable the potential rider (or someone on his behalf) to indicate a destination location, a number of riders, a class of service, a time to arrive, and a variety of other pieces of information relevant to the hailing. The hailing device at the fixed location could broadcast the hailing request to one or more nearby vehicles either by attempting to communicate directly with the one or more nearby vehicles or by communication through a central system, using appropriate wireless communication devices including receivers and transmitters for this purpose.

### Processing received hailing requests

Once a hailing request receiver on the autonomous vehicle (e.g. one of the communication devices 240 shown in figure 12) detects a hailing request communicated using one of the signaling modes and devices described above or other similar signaling modes or devices, a processor on the autonomous vehicle processes the information contained in the hailing request and, among other things, decides whether to accept the request. This decision may be made by the process running on the autonomous vehicle or by a central system to which the vehicle is connected or by a combination of the two. The decision can be based on a combination of a number of factors. These factors include, but are not limited to: the vehicle's current location, the vehicle's current speed, current traffic conditions in the surrounding area, and the vehicle's determination of its ability to come to a safe stop and pick up the passenger. Nearby autonomous vehicles may also communicate with each other using vehicle-to-vehicle (V2V) communication to ensure that multiple vehicles do not respond to the same hailing request. Communication between vehicles between for this purpose could also be achieved using a centralized system.

### Communication between an autonomous vehicle and a hailing device

Although we have described various methods for hailing an autonomous vehicle by sending a hailing request from (or on behalf of) the potential rider or from a hailing device, thereby yielding one-way communication between the potential rider and the autonomous vehicle, in some cases it may be desirable to enable two-way communication between the potential rider (or an associated hailing device) and the autonomous vehicle, for the purpose of confirming a hailing request.

To confirm a hailing request, upon detection of, for example, an image-based, light-based, auditory, gestural, or other hailing request from a potential rider, the autonomous vehicle may transmit an image-based, light-based, or auditory receipt confirmation signal, for example, with the intent that this receipt confirmation would be uniquely identifiable as a response signal by a sensor or sensors mounted on the hailing device. Upon receipt of this receipt confirmation by the hailing device, the hailing device may transmit a hailing confirmation signal to the autonomous vehicle that is different from the original hailing request. Upon receipt of this hailing confirmation by the autonomous vehicle, the autonomous vehicle would initiate a pickup sequence including stopping near the potential rider for the purpose of picking up the rider.

Exemplary signaling modes for sending a receipt confirmation include those for sending a hailing request. More specifically, such methods include but are not limited to:
1. Responding to a hailing request by display of a black-and-white, grayscale, or color image or sequence of images on a display screen mounted on (for example on the outside of) the autonomous vehicle. The image properties (e.g., geometric features, texture, and appearance) should be chosen such that they can reliably be resolved by a vision sensor or sensors mounted on the hailing device and having a typical field of view and resolution.
2. Responding to a hailing request by emitting light or sound from one or more display screen, light emitting device, light-emitting diode, siren, klaxon, or other signaling device mounted on (for example, on the exterior) of the autonomous vehicle. The light intensity should be chosen such that it can reliably be detected by a vision sensor or sensors or light detection sensor or auditory sensors mounted on the hailing device and having a typical detection sensitivity, or perceived by a potential rider.
3. Responding to a hailing request by emitting from one or more speakers mounted on (for example, on the exterior of) the vehicle a sound or sequence of sounds. The volume level should be chosen such that it can reliably be detected by a sound measurement and sensor or sensors mounted on a hailing device and having a typical detection sensitivity, or perceived by a potential rider, given a typical expected ambient noise level.

The image or images displayed, light or lights displayed, and sound or sounds emitted by the autonomous vehicle may exhibit exemplary properties that include, for example, those described above for image or images displayed, light or lights displayed, and sound or sounds emitted by the hailing device. Information may also be encoded in the image or images displayed, light or lights displayed, and sound or sounds emitted by the autonomous vehicle using, for example, the methods described above for the image or images displayed, light or lights displayed, and sound or sounds emitted by the hailing device.

Once a receipt confirmation has been received by the hailing device, the hailing device may transmit a hailing confirmation to the autonomous vehicle. Signaling modes for sending for the hailing confirmation can include those that can be employed for transmitting a hailing request. However, it may not be necessary to encode within the hailing confirmation signal information related to the hailing request (e.g., the desired class or cost of service, or the presence of a priority or emergency hailing request). As a result, the hailing confirmation signal could be simpler than the hailing request.

Communication may also be verbal through speech output (utterances) by one or more speakers mounted on the exterior of the vehicle and verbal responses (utterances) received from the potential rider through one or more microphones mounted on the autonomous vehicle. In order to do so, a processor on the autonomous vehicle may execute a speech synthesis program or dialog system contained on the vehicle, play back recorded speech, or broadcast speech received from a human remote operator connected to the vehicle via a wireless link. The volume may be chosen to be appropriate for the distance of the potential rider to the autonomous vehicle. Once a verbal response has been received by the autonomous vehicle, a speech recognizer or decoding program on the vehicle may determine whether to interpret the received voice signal as a hailing confirmation of the hailing request.

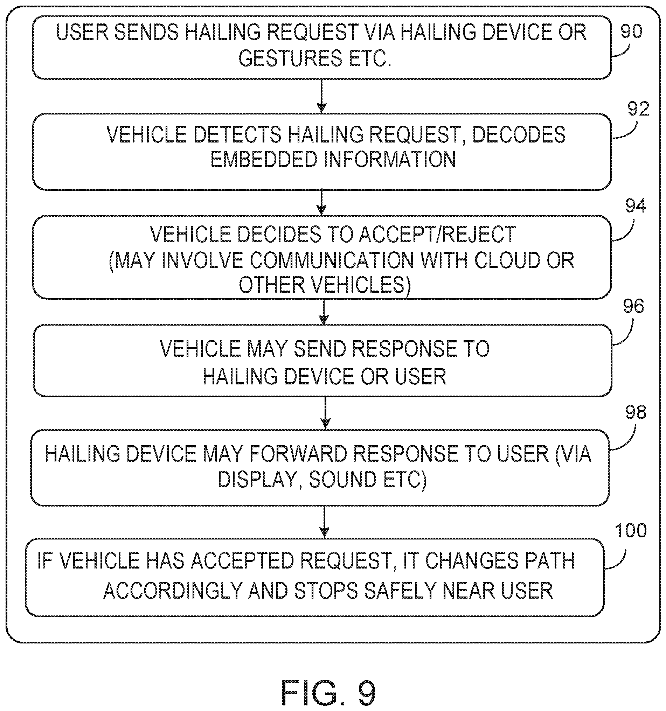

As shown in figure 9, in some examples of the hailing system, the process of hailing an autonomous vehicle, begins with the potential rider causing a hailing request to be sent 90 using a signaling mode offered by a hailing device or by gesturing, for example. The autonomous vehicle detects the hailing request and decodes the information embedded in it 92. A process running on the autonomous vehicle decides to accept or reject the request 94 and in doing so may communicate with a central server or other vehicles. The autonomous vehicle then sends a response to the hailing device 96 for the user using a signaling mode. The hailing device may forward the response to the user 98 by giving the user notice on a mobile device or a kiosk using sounds or visual indicators. If the autonomous vehicle accepts the request, it changes its path accordingly and stops safely near the rider 100. In some implementations, not all of the steps shown in figure 9 need be performed.

## Claims

1. A method performed by a device, wherein the device (48) is a mobile device or a device in a fixed location, the method comprising
receiving, through a user interface (248), an indication of an intention of a potential rider to use an autonomous vehicle (200);
in response to the receipt of the indication, sending a hailing request by a signaling mode to one or more autonomous vehicles (200) adapted to receive the hailing request directly in accordance with the signaling mode, wherein the signaling mode comprises a visual mode comprising an emission of light modulated to encode the hailing request, wherein the emission of light comprises displaying a sequence of images (44, 46) on the device (48); and
receiving, from one of the one or more autonomous vehicles, (200) a receipt confirmation.

2. The method of claim 1 in which the hailing request is sent by a combination of two or more signaling modes.

3. The method of claim 1 comprising
configuring the hailing request to include hailing information related to the intended use of the autonomous vehicle,
wherein the hailing information comprises either one of
a destination location,
a class or type of service including one of a use by a potential rider or a user for a parcel delivery,
a number of passengers,
information about the potential rider or a parcel to be delivered,
information about a parcel to be carried in the vehicle, or
a priority of service.

4. The method of claim 1 comprising
in response to receiving the receipt confirmation, sending a hailing confirmation to the autonomous vehicle.

5. The method of claim 1, wherein the method comprises
encoding the hailing request by modulating one or more of wavelength, color or intensity of the emitted light.

6. The method of claim 1, wherein the signaling mode further comprises an audio mode comprising the emission of sound, the method comprises
encoding the hailing request by modulating one or more of frequency or volume of the emitted sound.

7. An apparatus comprising
a device (48) configured to hail an autonomous vehicle, the device comprising
an input feature configured to receive the indication of an intention of a potential rider to use the autonomous vehicle,
an output feature configured to send the hailing request by a signaling mode to at least one autonomous vehicle that is adapted to receive the hailing request directly in accordance with the signaling mode wherein the signalling mode comprises a visual mode comprising an emission of light modulated to encode the hailing request, wherein the emission of light comprises displaying a sequence of images (44, 46) on the device (48), and
a receiver feature configured to receive a receipt confirmation from the autonomous vehicle after the hailing request has been sent,
wherein the input feature, the output feature and the receiver feature of the device are configured to perform a method in accordance with any one of the claims 1-6.

8. A method comprising
receiving, from a device (48), wherein the device (48) is a mobile device or a device in a fixed location, directly at a receiving device of an autonomous vehicle (200), a hailing request carried by a signaling mode, the hailing request corresponding to an indication of an intention of the potential rider to use an autonomous vehicle, wherein the signaling mode comprises a visual mode comprising light modulated to encode the hailing request, wherein the light modulated to encode the hailing request comprises a sequence of images (44, 46) displayed on the device (48);
processing the hailing request at the autonomous vehicle (200) to determine whether to respond to the hailing request; and
sending a receipt confirmation from the autonomous vehicle to the device (48).

9. The method of claim 8 in which the hailing request is received by a combination of two or more signaling modes.

10. The method of claim 8, wherein the hailing request includes either one of hailing information related to the use of the autonomous vehicle,
a destination location,
a class or type or priority of service,
a number of passengers, or
information about the potential rider or a parcel to be delivered.

11. The method of claim 8 comprising
receiving a hailing confirmation after the receipt confirmation has been sent.

12. The method of claim 11, comprising
upon receipt by the autonomous vehicle of the hailing confirmation, initiating, by the autonomous vehicle, a pickup sequence including stopping near the potential rider for the purpose of picking up the rider.

13. An apparatus comprising
a device for use at the autonomous vehicle, the device comprising
a receiving feature configured to receive the hailing request directly in accordance with the signaling mode from a device in the vicinity of the potential rider, wherein the signalling mode comprises a visual mode comprising an emission of light, wherein the emission of light comprises displaying a sequence of images (44, 46), and
a processor configured to process the hailing request, and
an output feature configured to output a receipt confirmation to the device after the hailing request has been received,
wherein the receiving feature, output feature, and the processor of the device are configured to perform a method in accordance with any one of the claims 8-12.

14. An autonomous vehicle (200) comprising
a processor and software to be executed by the processor to cause the autonomous vehicle to travel to an identified location, and
the apparatus of claim 13 to provide a pickup location to the processor based on the hailing request.

## Patentansprüche

1. Verfahren, das durch eine Vorrichtung durchgeführt wird, wobei die Vorrichtung (48) eine mobile Vorrichtung oder eine Vorrichtung an einem festen Standort ist, wobei das Verfahren umfasst
Empfangen, über eine Benutzerschnittstelle (248), eines Hinweises auf eine Absicht eines potentiellen Mitfahrers, ein autonomes Fahrzeug (200) zu verwenden;
in Reaktion auf den Empfang des Hinweises, Senden einer Rufanforderung durch einen Signalisierungsmodus an eines oder mehrere autonome Fahrzeuge (200), die eingerichtet sind, die Rufanforderung direkt gemäß dem Signalisierungsmodus zu empfangen, wobei der Signalisierungsmodus einen visuellen Modus umfasst, der eine Emission von Licht umfasst, das moduliert wird, um die Rufanforderung zu codieren, wobei die Emission von Licht Anzeigen einer Sequenz von Bildern (44, 46) auf der Vorrichtung (48) umfasst; und
Empfangen, von einem des einen oder der mehreren autonomen Fahrzeuge (200), einer Empfangsbestätigung.

2. Verfahren nach Anspruch 1, wobei die Rufanforderung durch eine Kombination aus zwei oder mehr Signalisierungsmodi gesendet wird.

3. Verfahren nach Anspruch 1, umfassend
Auslegen der Rufanforderung so, dass sie eine Rufinformation in Bezug auf die beabsichtigte Verwendung des autonomen Fahrzeugs umfasst,
wobei die Rufinformation ein beliebiges umfasst von
einem Zielort,
einer Klasse oder Art von Dienst, einschließlich eines einer Verwendung durch einen potentiellen Mitfahrer oder einen Benutzer für eine Paketauslieferung, einer Anzahl von Passagieren,
einer Information über den potentiellen Mitfahrer oder ein auszulieferndes Paket, einer Information über ein in dem Fahrzeug zu transportierendes Paket oder einer Priorität eines Dienstes.

4. Verfahren nach Anspruch 1, umfassend
in Reaktion auf das Empfangen der Empfangsbestätigung, Senden einer Rufbestätigung an das autonome Fahrzeug.

5. Verfahren nach Anspruch 1, wobei das Verfahren umfasst Codieren der Rufanforderung durch Modulieren einer oder mehrerer einer Wellenlänge, Farbe oder Intensität des emittierten Lichts.

6. Verfahren nach Anspruch 1, wobei der Signalisierungsmodus ferner einen Audiomodus umfasst, der die Emission von Schall umfasst, wobei das Verfahren umfasst
Codieren der Rufanforderung durch Modulieren einer oder mehrerer einer Frequenz oder Lautstärke des emittierten Schalls.

7. Einrichtung umfassend
eine Vorrichtung (48), die ausgelegt ist, ein autonomes Fahrzeug zu rufen, wobei die Vorrichtung umfasst
ein Eingabemerkmal, das ausgelegt ist, den Hinweis auf eine Absicht eines potentiellen Mitfahrers, das autonome Fahrzeug zu verwenden, zu empfangen, ein Ausgabemerkmal, das ausgelegt ist, die Rufanforderung durch einen Signalisierungsmodus an mindestens ein autonomes Fahrzeug zu senden, das eingerichtet ist, die Rufanforderung direkt gemäß dem Signalisierungsmodus zu empfangen, wobei der Signalisierungsmodus einen visuellen Modus umfasst, der eine Emission von Licht umfasst, das moduliert wird, um die Rufanforderung zu codieren, wobei die Emission von Licht Anzeigen einer Sequenz von Bildern (44, 46) auf der Vorrichtung (48) umfasst, und
ein Empfangsmerkmal, das ausgelegt ist, eine Empfangsbestätigung von dem autonomen Fahrzeug zu empfangen, nachdem die Rufanforderung gesendet wurde,
wobei das Eingabemerkmal, das Ausgabemerkmal und das Empfangsmerkmal der Vorrichtung ausgelegt sind, ein Verfahren nach einem der Ansprüche 1-6 durchzuführen.

8. Verfahren, umfassend
Empfangen, von einer Vorrichtung (48), wobei die Vorrichtung (48) eine mobile Vorrichtung oder eine Vorrichtung an einem festen Standort ist, direkt an einer Empfangsvorrichtung eines autonomen Fahrzeugs (200), einer durch einen Signalisierungsmodus transportierten Rufanforderung, wobei die Rufanforderung einem Hinweis auf eine Absicht des potentiellen Mitfahrers, ein autonomes Fahrzeug zu verwenden, entspricht, wobei der Signalisierungsmodus einen visuellen Modus umfasst, der Licht umfasst, das moduliert wird, um die Rufanforderung zu codieren, wobei das Licht, das moduliert wird, um die Rufanforderung zu codieren, eine Sequenz von Bildern (44, 46) umfasst, die auf der Vorrichtung (48) angezeigt wird;
Verarbeiten der Rufanforderung an dem autonomen Fahrzeug (200), um zu bestimmen, ob auf die Rufanforderung geantwortet werden soll; und
Senden einer Empfangsbestätigung von dem autonomen Fahrzeug an die Vorrichtung (48).

9. Verfahren nach Anspruch 8, wobei die Rufanforderung durch eine Kombination aus zwei oder mehr Signalisierungsmodi empfangen wird.

10. Verfahren nach Anspruch 8, wobei die Rufanforderung ein beliebiges umfasst von
einer Rufinformation in Bezug auf die Verwendung des autonomen Fahrzeugs, eines Zielorts,
einer Klasse oder Art oder Priorität eines Dienstes,
einer Anzahl von Passagieren, oder
einer Information über den potentiellen Mitfahrer oder ein auszulieferndes Paket.

11. Verfahren nach Anspruch 8, umfassend
Empfangen einer Rufbestätigung, nachdem die Empfangsbestätigung gesendet wurde.

12. Verfahren nach Anspruch 11, umfassend
bei Empfang der Rufbestätigung durch das autonome Fahrzeug, Initiieren, durch das autonome Fahrzeug, einer Abholsequenz, einschließlich eines Anhaltens in der Nähe des potentiellen Mitfahrers zum Zweck eines Abholens des Mitfahrers.

13. Einrichtung umfassend
eine Vorrichtung zur Verwendung an dem autonomen Fahrzeug, wobei die Vorrichtung umfasst
ein Empfangsmerkmal, das ausgelegt ist, die Rufanforderung direkt gemäß dem Signalisierungsmodus von einer Vorrichtung in der Nähe des potentiellen Mitfahrers zu empfangen, wobei der Signalisierungsmodus einen visuellen Modus umfasst, der eine Emission von Licht umfasst, wobei die Emission von Licht Anzeigen einer Sequenz von Bildern (44, 46) umfasst, und
einen Prozessor, der ausgelegt ist, die Rufanforderung zu verarbeiten, und
ein Ausgabemerkmal, das ausgelegt ist, eine Empfangsbestätigung an die Vorrichtung auszugeben, nachdem die Rufanforderung empfangen wurde,
wobei das Empfangsmerkmal, das Ausgabemerkmal und der Prozessor der Vorrichtung ausgelegt sind, ein Verfahren nach einem der Ansprüche 8-12 durchzuführen.

14. Autonomes Fahrzeug (200), umfassend
einen Prozessor und durch den Prozessor auszuführende Software, um das autonome Fahrzeug zu veranlassen, zu einem identifizierten Standort zu fahren, und
die Einrichtung nach Anspruch 13, um einen Abholort zu dem Prozessor basierend auf der Rufanforderung bereitzustellen.

## Revendications

1. Procédé réalisé par un dispositif, le dispositif (48) étant un dispositif mobile ou un dispositif en un lieu fixe, le procédé comportant les étapes consistant à
recevoir, par l'intermédiaire d'une interface (248) d'utilisateur, une indication d'une intention d'un occupant potentiel d'utiliser un véhicule autonome (200) ; en réponse à la réception de l'indication, envoyer une demande de hélage par un mode de signalisation à un ou plusieurs véhicules autonomes (200) prévus pour recevoir directement la demande de hélage conformément au mode de signalisation, le mode de signalisation comportant un mode visuel comportant une émission de lumière modulée pour coder la demande de hélage, l'émission de lumière comportant l'affichage d'une suite d'images (44, 46) sur le dispositif (48) ; et
recevoir, en provenance du ou des véhicules autonomes, (200) une confirmation de réception.

2. Procédé selon la revendication 1, dans lequel la demande de hélage est envoyée par une combinaison de deux modes de signalisation ou plus.

3. Procédé selon la revendication 1, comportant la configuration de la demande de hélage pour inclure des informations de hélage liées à l'utilisation prévue du véhicule autonome,
les informations de hélage comportant un élément ou un autre parmi un lieu de destination,
une classe ou un type de service comprenant soit une utilisation par un occupant potentiel, soit une utilisation pour une livraison de colis,
un nombre de passagers,
des informations concernant l'occupant potentiel ou un colis à livrer,
des informations concernant un colis à transporter dans le véhicule, ou
une priorité de service.

4. Procédé selon la revendication 1 comportant
en réponse à la réception de la confirmation de réception, l'envoi d'une confirmation de hélage au véhicule autonome.

5. Procédé selon la revendication 1, le procédé comportant le codage de la demande de hélage en modulant un ou plusieurs éléments parmi la longueur d'onde, la couleur et l'intensité de la lumière émise.

6. Procédé selon la revendication 1, le mode de signalisation comportant en outre un mode audio comportant l'émission d'un son, le procédé comportant le codage de la demande de hélage en modulant un ou plusieurs éléments parmi la fréquence et le volume du son émis.

7. Appareil comportant
un dispositif (48) configuré pour héler un véhicule autonome, le dispositif comportant
une fonctionnalité d'entrée configurée pour recevoir l'indication d'une intention d'un occupant potentiel d'utiliser le véhicule autonome,
une fonctionnalité de sortie configurée pour envoyer la demande de hélage par un mode de signalisation à au moins un véhicule autonome qui est prévu pour recevoir directement la demande de hélage conformément au mode de signalisation, le mode de signalisation comportant un mode visuel comportant une émission de lumière modulée pour coder la demande de hélage, l'émission de lumière comportant l'affichage d'une suite d'images (44, 46) sur le dispositif (48), et
une fonctionnalité de récepteur configurée pour recevoir une confirmation de réception en provenance du véhicule autonome après que la demande de hélage a été envoyée,
la fonctionnalité d'entrée, la fonctionnalité de sortie et la fonctionnalité de récepteur du dispositif étant configurées pour réaliser un procédé selon l'une quelconque des revendications 1 à 6.

8. Procédé comportant les étapes consistant à
recevoir, en provenance d'un dispositif (48), le dispositif (48) étant un dispositif mobile ou un dispositif dans un lieu fixe, directement au niveau d'un dispositif de réception d'un véhicule autonome (200), une demande de hélage transportée par un mode de signalisation, la demande de hélage correspondant à une indication d'une intention de l'occupant potentiel d'utiliser un véhicule autonome, le mode de signalisation comportant un mode visuel comportant une lumière modulée pour coder la demande de hélage, la lumière modulée pour coder la demande de hélage comportant une suite d'images (44, 46) affichées sur le dispositif (48) ; traiter la demande de hélage au niveau du véhicule autonome (200) pour déterminer s'il convient de répondre à la demande de hélage ; et
envoyer une confirmation de réception du véhicule autonome au dispositif (48).

9. Procédé selon la revendication 8, dans lequel la demande de hélage est reçue par une combinaison de deux modes de signalisation ou plus.

10. Procédé selon la revendication 8, la demande de hélage comprenant un élément ou un autre parmi
des informations de hélage liées à l'utilisation du véhicule autonome,
un lieu de destination,
une classe ou un type ou une priorité de service,
un nombre de passagers, ou
des informations concernant l'occupant potentiel ou un colis à livrer.

11. Procédé selon la revendication 8 comportant
la réception d'une confirmation de hélage après que la confirmation de réception a été envoyée.

12. Procédé selon la revendication 11, comportant
suite à la réception par le véhicule autonome de la confirmation de hélage, le lancement, par le véhicule autonome, d'une séquence de prise en charge comprenant le fait de s'arrêter près de l'occupant potentiel dans le but de prendre en charge l'occupant.

13. Appareil comportant
un dispositif destiné à être utilisé au niveau du véhicule autonome, le dispositif comportant
une fonctionnalité de réception configurée pour recevoir la demande de hélage directement conformément au mode de signalisation en provenance d'un dispositif au voisinage de l'occupant potentiel, le mode de signalisation comportant un mode visuel comportant une émission de lumière, l'émission de lumière comportant l'affichage d'une suite d'images (44, 46), et
un processeur configuré pour traiter la demande de hélage, et
une fonctionnalité de sortie configurée pour délivrer une confirmation de réception au dispositif après que la demande de hélage a été reçue,
la fonctionnalité de réception, la fonctionnalité de sortie, et le processeur du dispositif étant configurés pour réaliser un procédé selon l'une quelconque des revendications 8 à 12.

14. Véhicule autonome (200) comportant
un processeur et un logiciel à exécuter par le processeur pour amener le véhicule autonome à se déplacer jusqu'à un lieu identifié, et
l'appareil selon la revendication 13 pour fournir un lieu de prise en charge au processeur d'après la demande de hélage.
